# EUROPEAN PATENT APPLICATION

(11) **EP 4 604 312 A1**
(43) Date of publication of application: **20.08.2025**
(21) Application number: 23932706.7
(22) Date of filing: 08.09.2023
(51) Int. Cl.: H01M 50/593, H01M 50/103, H01M 50/553

(54) **BATTERY CELL, BATTERY, AND ELECTRIC DEVICE**

(30) Priority: 13.04.2023 CN 202310395215
(71) Applicant: Contemporary Amperex Technology Co., Limited, Ningde, Fujian 352100 (CN)
(72) Inventor: WU, Kai, Ningde, Fujian 352100 (CN); HUANG, Shoujun, Ningde, Fujian 352100 (CN); CHEN, Xinxiang, Ningde, Fujian 352100 (CN); JIANG, Xiangwei, Ningde, Fujian 352100 (CN); ZHENG, Yulian, Ningde, Fujian 352100 (CN)
(74) Representative: Laufhütte, Dieter
(86) International application number: PCT/CN2023/117647
(87) International publication number: WO 2024/212434

(57) **Abstract**

A battery cell, a battery, and a power consuming device are provided. The battery cell includes: an electrode assembly (21); an electrode terminal (41), electrically connected to the electrode assembly (21); a housing (30), configured to accommodate the electrode assembly (21), where the housing (30) includes a wall portion (301) and a fixing structure (50), and the fixing structure (50) is fixedly arranged on the wall portion (301) and configured to fix the electrode terminal (41); an insulating member (42), arranged between the fixing structure (50) and the electrode terminal (41); and an insulating protection member (60), at least partially covering an outer surface of the fixing structure (50), where the insulating protection member (60) includes an insertion portion (62), and at least a part of the insertion portion (62) is inserted between the fixing structure (50) and the insulating member (42). By arranging the insulating protection member (60), the outer surface of the fixing structure (50) is insulated and protected; and the insertion portion (62) is inserted between the fixing structure (50) and the insulating member (42), so that a creepage distance between the electrode terminal (41) and the fixing structure (50) is increased, and an external conductive member can be better prevented from being inserted between the fixing structure (50) and the electrode terminal (41), thereby reducing a short circuit risk.

## Description

The present application claims priority to Chinese Patent Application No. 202310395215.7, entitled "BATTERY CELL, BATTERY, AND POWER CONSUMING DEVICE" and filed with the China National Intellectual Property Administration on April 13, 2023, which is incorporated herein by reference in its entirety.

### TECHNICAL FIELD

The present application relates to the field of battery technologies, and more specifically, to a battery cell, a battery, and a power consuming device.

### BACKGROUND

Energy conservation and emission reduction are keys to sustainable development of the automobile industry, and due to advantages of energy conservation and environmental protection, electric vehicles become an important part of the sustainable development of the automobile industry. For the electric vehicles, the battery technology is also an important factor related to development of the electric vehicles.

An electrode terminal is arranged on a wall portion of a battery cell, to output electrical energy of the battery cell or charge the battery cell. At present, an insulating member is arranged in a mounting hole of the electrode terminal on a housing, to insulate the housing from the electrode terminal. However, in this structure, a creepage distance between the electrode terminal and the housing is small, and short circuit is likely to occur under the influence of an external conductive member

### SUMMARY

An objective of the embodiments of the present application is to provide a battery cell, a battery, and a power consuming device, to resolve a problem of being prone to short circuit under the influence of an external conductive member due to a small creepage distance between an electrode terminal and a housing in the related art.

According to a first aspect, an embodiment of the present application provides a battery cell, including:
an electrode assembly;
an electrode terminal, electrically connected to the electrode assembly;
a housing, configured to accommodate the electrode assembly, where the housing includes a wall portion and a fixing structure, and the fixing structure is fixedly arranged on the wall portion and configured to fix the electrode terminal;
an insulating member, arranged between the fixing structure and the electrode terminal; and
an insulating protection member, at least partially covering an outer surface of the fixing structure, where the insulating protection member includes an insertion portion, and at least a part of the insertion portion is inserted between the fixing structure and the insulating member.

In the technical solution of the embodiments of the present application, the insulating protection member is arranged to cover the outer surface of the fixing structure, so that the outer surface of the fixing structure is insulated and protected, and the insulation performance of the outer surface of the fixing structure is improved, thereby reducing the influence of an external conductive member; and the insertion portion is inserted between the fixing structure and the insulating member, so that a creepage distance between the electrode terminal and the fixing structure is increased, and the external conductive member can be better prevented from being inserted between the fixing structure and the electrode terminal, thereby improving the insulating safety and reducing a short circuit risk.

In some embodiments, the fixing structure includes a first fixing structure and a second fixing structure, at least one of the first fixing structure and the second fixing structure is fixedly connected to the wall portion, the first fixing structure is located on an inner side of the second fixing structure away from the housing in a thickness direction of the wall portion, the first fixing structure cooperates with the second fixing structure to clamp and fix the electrode terminal, at least a part of the insulating protection member covers an outer surface of the first fixing structure, and at least a part of the insertion portion is inserted between the first fixing structure and the insulating member.

The first fixing structure and the second fixing structure are arranged to clamp the electrode terminal through cooperation, so that mounting and fixing of the electrode terminal are facilitated, thereby facilitating assembly of the electrode terminal.

In some embodiments, the first fixing structure includes a connection portion and a clamping portion; in the thickness direction of the wall portion, the clamping portion and the second fixing structure are arranged opposite to each other, and the connection portion is located between the clamping portion and the second fixing structure;
the insulating member includes a first insulating portion and a second insulating portion, at least a part of the first insulating portion is located between the clamping portion and the electrode terminal in the thickness direction of the wall portion, at least a part of the second insulating portion is located between the clamping portion and the electrode terminal in a first direction, and the first direction is a direction pointing from the clamping portion to the electrode terminal and perpendicular to the thickness direction of the wall portion; and
at least a part of the insertion portion is located between the first insulating portion and the clamping portion.

The clamping portion is arranged to clamp and fix the electrode terminal through cooperation with the second fixing structure, and the connection portion is arranged to support the clamping portion on the wall portion for ease of fixing of the clamping portion; and the insulating member is provided with the first insulating portion and the second insulating portion, so that the clamping portion and the electrode terminal are better insulated and separated from each other.

In some embodiments, the insertion portion is provided with a first engagement portion, a second engagement portion is arranged between the first fixing structure and the insulating member, and the first engagement portion is in engagement fit with the second engagement portion.

The first engagement portion is arranged on the insertion portion, the second engagement portion is arranged between the first fixing structure and the insulating member, and the insertion portion is fixed through engagement fit between the first engagement portion and the second engagement portion, so that the insertion portion can be better prevented from falling off, and the insulating protection member and the first fixing structure can be better fitted and fixed.

In some embodiments, the first engagement portion includes a limiting protrusion, the second engagement portion is arranged on at least one of the first fixing structure and the insulating member, the second engagement portion includes a limiting groove, and at least a part of the limiting protrusion is accommodated in the limiting groove.

The limiting groove is provided on at least one of the first fixing structure and the insulating member, the limiting protrusion is arranged on the insertion portion, and the limiting protrusion is accommodated through the limiting groove, so that the insertion portion is clamped and fixed, and a structure is simple and easy to process and manufacture.

In some embodiments, the first engagement portion includes a limiting protrusion, the second engagement portion includes an accommodating gap formed between the first fixing structure and the second insulating portion, and at least a part of the limiting protrusion is accommodated in the accommodating gap.

The accommodating gap is provided between the first fixing structure and the second insulating portion, the limiting protrusion is arranged on the insertion portion, and the limiting protrusion is accommodated through the accommodating gap, so that the insertion portion is clamped and positioned, and a structure is simple and easy to process and manufacture.

In some embodiments, the clamping portion has a first end surface facing the first insulating portion, the clamping portion has a second end surface facing the second insulating portion, the first end surface and the second end surface are connected through a first transition surface, the first transition surface is a rounded surface or a chamfered surface, and the first transition surface and the second insulating portion are spaced apart to form the accommodating gap.

The first transition surface is arranged between the first end surface and the second end surface of the clamping portion, and the first transition surface is spaced apart from the second insulating portion to form the accommodating gap, so that the limiting protrusion is accommodated and positioned, and a structure is simple and easy to process and manufacture.

In some embodiments, the insulating protection member includes a first coverage portion covering an outer surface of the clamping portion, and the insertion portion is connected to the first coverage portion.

The first coverage portion is arranged to cover the outer surface of the clamping portion, and the insertion portion is connected to the first coverage portion, so that the outer surface of the clamping portion and a surface close to the electrode terminal are well insulated and protected, thereby improving the insulation performance.

In some embodiments, the first coverage portion is bonded to the clamping portion.

The first coverage portion is bonded to the clamping portion, so that the clamping portion is insulated and protected, and the connection and fixing between the first coverage portion and the clamping portion are facilitated, thereby facilitating connection and fixing between the insulating protection member and the first fixing structure.

In some embodiments, the insulating protection member further includes a second coverage portion attached against an outer surface of the connection portion, and the second coverage portion is connected to the first coverage portion.

The second coverage portion is arranged and attached against the outer surface of the connection portion, so that the connection portion can be insulated and protected, thereby better improving the insulating protection performance.

In some embodiments, a first clamping protrusion is arranged on the second coverage portion, and a first clamping groove that is engaged with the first clamping protrusion is provided on the connection portion; and/or
a first engagement groove is provided on the second coverage portion, and a first engagement protrusion that is engaged with the first engagement groove is arranged on the connection portion.

The first clamping protrusion is arranged on the second coverage portion, and the first clamping groove is provided on the connection portion, so that the second coverage portion can be fixedly connected to the connection portion through engagement between the first clamping protrusion and the first clamping groove, and the second coverage portion is further engaged with the insertion portion, to fix the insulating protection member on the first fixing structure, thereby facilitating assembly and fixing.

The first engagement groove is provided on the second coverage portion, and the first engagement protrusion is arranged on the connection portion, so that the second coverage portion can be fixedly connected to the connection portion through engagement between the first engagement protrusion and the first engagement groove, and the second coverage portion is further engaged with the insertion portion, to fix the insulating protection member on the first fixing structure, thereby facilitating assembly and fixing.

In some embodiments, an angle between the second coverage portion and the first coverage portion is an acute angle.

The angle between the second coverage portion and the first coverage portion is an acute angle, so that the second coverage portion can cooperate with the insertion portion to clamp the first fixing structure, and the insulating protection member is further connected to the first fixing structure, thereby facilitating assembly.

In some embodiments, a surface of the second coverage portion close to the connection portion has a non-sticking characteristic.

The surface of the second coverage portion close to the connection portion has a non-sticking characteristic, so that engagement connection between the second coverage portion and the connection portion is facilitated, thereby facilitating assembly.

In some embodiments, the insulating protection member further includes an extension portion covering an outer surface of the wall portion, and the extension portion is connected to the second coverage portion.

The extension portion is arranged to cover the outer surface of the wall portion, so that an insulating protection effect can be better achieved.

In some embodiments, the first coverage portion, the second coverage portion, the extension portion, and the insertion portion are integrally formed and arranged.

The first coverage portion, the second coverage portion, the extension portion, and the insertion portion are integrally formed, so that processing and manufacturing of the insulating protection member are facilitated.

In some embodiments, the first fixing structure and the wall portion are an integrally formed structure; and/or
the second fixing structure and the wall portion are an integrally formed structure; and/or
the first fixing structure and the second fixing structure are an integrally formed structure.

The first fixing structure and the wall portion are integrally formed, so that connection and fixing between the first fixing structure and the wall portion are facilitated, and processing and manufacturing are also facilitated.

The second fixing structure and the wall portion are integrally formed, so that connection and fixing between the second fixing structure and the wall portion are facilitated, and processing and manufacturing are also facilitated.

The first fixing structure and the second fixing structure are integrally formed, so that connection and fixing between the first fixing structure and the second fixing structure are facilitated, and processing and manufacturing are also facilitated.

In some embodiments, an insulating sealing member is further arranged between the fixing structure and the electrode terminal.

The insulating sealing member is arranged between the fixing structure and the electrode terminal, so that the sealing performance is improved, and the insulating protection performance between the fixing structure and the electrode terminal can be improved.

In some embodiments, the insertion portion has a non-sticking characteristic.

The insertion portion has a non-sticking characteristic, so that the insertion portion can be inserted between the fixing structure and the insulating member, thereby facilitating assembly, and the insulating protection member can better fit and cover the outer surface of the fixing structure.

In some embodiments, the housing includes a shell and an end cap, one end of the shell has an opening, the end cap covers the opening, the shell includes a side wall and a bottom wall, the side wall is annularly disposed on an outer side of the electrode assembly, and the bottom wall and the opening are arranged opposite to each other; and the wall portion is at least a partial region of the end cap, or the wall portion is at least a partial region of the bottom wall, or the wall portion is at least a partial region of the side wall.

At least a partial region of the end cap is used as the wall portion, or at least a partial region of the bottom wall is used as the wall portion, or at least a partial region of the side wall is used as the wall portion, so that a layout design of the electrode terminal is facilitated.

According to a second aspect, an embodiment of the present application provides a battery, including the battery cell according to any one of the foregoing embodiments.

According to a third aspect, an embodiment of the present application provides a power consuming device, including the battery according to the foregoing embodiment.

The foregoing description only refers to an overview of the technical solutions of the present application. In order to understand the technical means of the present application more clearly, the present application can be implemented according to the content of this specification. In addition, to make the above-mentioned and other objectives, features, and advantages of the present application more comprehensible, specific implementations of the present application are listed below.

### BRIEF DESCRIPTION OF THE DRAWINGS

To describe the technical solutions of the embodiments of the present application more clearly, the accompanying drawings required for the embodiments or exemplary technical description will be briefly described below. Apparently, the accompanying drawings described below are only some embodiments of the present application. For a person of ordinary skill in the art, other accompanying drawings can be further obtained according to the accompanying drawings without creative efforts.
FIG. 1 is a schematic structural diagram of a vehicle according to some embodiments of the present application;
FIG. 2 is a schematic exploded structural view of a battery according to some embodiments of the present application;
FIG. 3 is a schematic exploded structural view of a battery cell according to some embodiments of the present application;
FIG. 4 is a schematic top structural view of mounting a wall portion of an electrode terminal on a housing according to some embodiments of the present application;
FIG. 5 is a schematic cross-sectional structural view along a line A-A in FIG. 4;
FIG. 6 is an enlarged view of a part B in FIG. 5;
FIG. 7 is an enlarged view of a part C in FIG. 6;
FIG. 8 is a schematic top structural view of a corresponding part of a second engagement portion in a battery cell according to some other embodiments of the present application;
FIG. 9 is a schematic top structural view of a corresponding part of a second engagement portion in a battery cell according to still some other embodiments of the present application;
FIG. 10 is a schematic top structural view of a corresponding part of a second engagement portion in a battery cell according to yet some other embodiments of the present application;
FIG. 11 is a schematic cross-sectional structural view of a connection part between an electrode terminal and a wall portion in a battery cell according to some other embodiments of the present application;
FIG. 12 is an enlarged view of a part D in FIG. 11;
FIG. 13 is a schematic cross-sectional structural view of a connection part between an electrode terminal and a wall portion in a battery cell according to still some other embodiments of the present application;
FIG. 14 is a schematic cross-sectional structural view of a connection part between an electrode terminal and a wall portion in a battery cell according to still some other embodiments of the present application;
FIG. 15 is an enlarged view of a part E in FIG. 14;
FIG. 16 is a schematic cross-sectional structural view of a connection part between an electrode terminal and a wall portion in a battery cell according to yet some other embodiments of the present application;
FIG. 17 is a schematic cross-sectional structural view of a connection part between an electrode terminal and a wall portion in a battery cell according to yet some other embodiments of the present application;
FIG. 18 is a schematic cross-sectional structural view of a connection part between an electrode terminal and a wall portion in a battery cell according to some other embodiments of the present application;
FIG. 19 is an enlarged view of a part F in FIG. 18;
FIG. 20 is a schematic structural diagram of connection between an extension portion and a wall portion in a battery cell according to some other embodiments of the present application;
FIG. 21 is a schematic cross-sectional structural view of a connection part between an electrode terminal and a wall portion in a battery cell according to yet some other embodiments of the present application; and
FIG. 22 is an enlarged view of a part G in FIG. 21.

Main reference numerals in the figures:
1000-Vehicle; 1001-Battery; 1002-Controller; 1003-Motor;
100-Box; 101-First part; 102-Second part;
200-Battery cell;
21-Electrode assembly; 211-Tab; 22-Adapting piece;
30-Housing; 31-Shell; 310-Opening; 311-Side wall; 312-Bottom wall; 32-End cap; 301-Wall portion; 3011-Second clamping groove; 3012-Second engagement protrusion;
41-Electrode terminal; 411-Flange portion;
42-Insulating member; 421-First insulating portion; 422-Second insulating portion;
43-Insulating sealing member;
50-Fixing structure; 51-First fixing structure; 511-Clamping portion; 5111-First end surface; 5112-Second end surface; 5113-First transition surface; 51131-Rounded surface; 51132-Chamfered surface; 512-Connection portion; 5121-First clamping groove; 5122-First engagement protrusion; 513-Second transition surface; 514-Third transition surface; 52-Second fixing structure;
60-Insulating protection member; 61-First coverage portion; 62-Insertion portion; 63-Second coverage portion; 631-First clamping protrusion; 632-First engagement groove; 64-First transition portion; 65-Second transition portion; 66-Extension portion; 661-Second clamping protrusion; 662-Second engagement groove;
70-First engagement portion; 71-Limiting protrusion; 711-Bump structure; 712-Hook;
80-Second engagement portion; 81-Accommodating gap; 82-Limiting groove; 821-Recessed groove; 822-Clamping slot;
91-First adhesive layer; and 92-Second adhesive layer.

### DETAILED DESCRIPTION

To make the technical problems to be resolved by the present application, the technical solutions, and the beneficial effects more comprehensible, the present application is further described below in detail with reference to the accompanying drawings and the embodiments. It should be understood that, the specific embodiments described herein are only used for describing the present application and are not intended to limit the present application.

Unless otherwise defined, all technical and scientific terms used in this specification have same meanings as those commonly understood by a person skilled in the art to which the present application belongs. The terms used in this specification are only intended to describe specific embodiments, and are not intended to limit the present application. The terms "include", "comprise", and any variants thereof in the specification and claims of the present application and the foregoing accompanying drawings are intended to cover non-exclusive inclusion.

In the description according to the embodiments of the present application, the technical terms "first", "second", and the like are only used to distinguish different objects, and should not be understood as indicating or implying relative importance or implicitly indicating a quantity, a specific order, or a primary and secondary relationship of indicated technical features. Therefore, a feature defined by "first" or "second" can explicitly or implicitly include one or more of the features.

"Embodiment" mentioned in the specification means that particular features, structures, or characteristics described with reference to the embodiment may be included in at least one embodiment of the present application. The term appearing at different positions of the specification may not refer to the same embodiment or an independent or alternative embodiment that is mutually exclusive with another embodiment. A person skilled in the art explicitly or implicitly understands that the embodiments described in the specification may be combined with other embodiments in any suitable manner.

In the description of the embodiments of the present application, the term "and/or" describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In the description of the embodiments of the present application, the term "a plurality of" means two or more (including two). Similarly, "a plurality of groups" means two or more groups (including two groups), and "a plurality of pieces" means two or more pieces (including two pieces). Unless otherwise expressly specified and defined, "several" means one or more.

In the description of the embodiments of the present application, orientation or position relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" are based on orientation or position relationships shown in the accompanying drawings, and are only for the convenience of describing the present application and simplifying the description, rather than indicating or implying that the indicated device or element must have a specific orientation or must be configured and operated in a specific orientation. Therefore, such terms should not be construed as a limitation to the embodiments of the present application.

In the description of the embodiments of the present application, unless otherwise expressly specified and defined, the technical terms "mount", "connect", "connection", "fix", and the like should be understood in a broad sense. For example, the connection may be a fixed connection, a detachable connection, or an integral connection; or may be a mechanical connection or an electrical connection; or may be a direct connection, an indirect connection through an intermediary, or internal communication between two elements or a mutual interaction relationship between two elements. A person of ordinary skill in the art can understand specific meanings of the terms in the embodiments of the present application according to specific situations.

In the description of the embodiments of the present application, when an element is described as being "fixed to" or "arranged on" another element, the element may be directly located on the another element or indirectly located on the another element. When an element is described as being "connected to" another element, the element may be directly connected to the another element or indirectly connected to the another element.

In the description of the embodiments of the present application, unless otherwise clearly specified and defined, the technical term "adjacent" refers to being close in position. For example, for three components A1, A2, and B, if a distance between A1 and B is greater than a distance between A2 and B, when comparison is performed between A2 and A1, A2 is closer to B, that is, A2 is adjacent to B, or B is adjacent to A2. For another example, when there are a plurality of components C and the plurality of components C are respectively C1, C2, ..., and CN, if a component C, for example, C2 is closer to the component B than other components C, B is adjacent to C2, or C2 is adjacent to B.

In the present application, a battery cell includes, but is not limited to, a lithium-ion secondary battery, a lithium-ion primary battery, a lithium-sulfur battery, a sodium-lithium-ion battery, a sodium-ion battery, or a magnesium-ion battery. The battery cell may be cylindrical, flat, cuboid, or in other shapes, but is not limited thereto. Generally, the battery cell is divided into, but is not limited to, three types according to encapsulating methods: a cylindrical battery cell, a square battery cell, and a soft package battery cell.

A battery mentioned in the embodiments of the present application is a single physical module including one or more battery cells to provide a higher voltage and a higher capacity. For example, the battery mentioned in the present application may include a battery module, a battery pack, or the like. The battery generally includes a box for packaging the one or more battery cells. The box can prevent liquid or other foreign objects from affecting charging or discharging of the one or more battery cells. In some cases, the battery cells may alternatively be directly used, that is, the battery may alternatively not include the box.

In the battery, when there are a plurality of battery cells, the plurality of battery cells may be connected in series, parallel, or series-parallel. Series-parallel connection means that both series connection and parallel connection exist among the plurality of battery cells. The plurality of battery cells may be directly connected in series, parallel, or series-parallel together, and then a whole formed by the plurality of battery cells may be accommodated in the box. Certainly, the battery may alternatively be in the form of a plurality of battery modules formed by the plurality of battery cells that are first connected in series, parallel, or series-parallel, and the plurality of battery modules are then connected in series, parallel, or series-parallel to form a whole and accommodated in the box. The battery may also include other structures, for example, the battery may also include a bus component for achieving electrical connection between the plurality of battery cells.

The battery cell in the embodiments of the present application includes an electrode assembly and a housing, and the electrode assembly is mounted in the housing.

The electrode assembly is also referred to as a battery core, and the electrode assembly is formed by a positive electrode plate, a negative electrode plate, and a separator. The electrode assembly works mainly relying on movement of metal ions between the positive electrode plate and the negative electrode plate. The positive electrode plate includes a positive electrode current collector and a positive electrode active substance layer, the positive electrode active substance layer is coated on a surface of the positive electrode current collector, a part of the positive electrode current collector not coated with the positive electrode active substance layer protrudes out of a part of the positive electrode current collector already coated with the positive electrode active substance layer, and the part of the positive electrode current collector not coated with the positive electrode active substance layer is used as a positive electrode tab, or a metal conductor is welded to and led out from the positive electrode current collector as the positive electrode tab. By using a lithium-ion battery as an example, a material of the positive electrode current collector may be aluminum, and a positive electrode active substance may be lithium cobalt oxide, lithium iron phosphate, ternary lithium, lithium manganese oxide, or the like. The negative electrode plate includes a negative electrode current collector and a negative electrode active substance layer, the negative electrode active substance layer is coated on a surface of the negative electrode current collector, a part of the negative electrode current collector not coated with the negative electrode active substance layer protrudes out of a part of the negative electrode current collector already coated with the negative electrode active substance layer, and the part of the negative electrode current collector not coated with the negative electrode active substance layer is used as a negative electrode tab, or a metal conductor is welded to and led out from the negative electrode current collector as the negative electrode tab. A material of the negative electrode current collector may be copper, and a negative electrode active substance may be carbon, silicon, or the like. To ensure that no fusing occurs when a large current passes through, there are a plurality of positive electrode tabs and the positive electrode tabs are stacked, and there are a plurality of negative electrode tabs and the negative electrode tabs are stacked. It may be understood that, in the electrode assembly, there may be one positive electrode tab and there may also be one negative electrode tab. That is, two groups of tabs are arranged on the electrode assembly, and each group includes at least one tab, where one group of tabs are positive electrode tabs, and the other group of tabs are negative electrode tabs.

A structure of the electrode assembly includes but is not limited to a wound structure or a laminated structure. In the wound structure, tabs are mostly welded to current collectors, and arrangement is then performed according to a sequence of positive electrode plate-separator-negative electrode plate-separator; and a cylindrical or square battery core is then formed through winding. In the laminated structure, tabs are mostly led out from current collectors, and positive electrode plates, negative electrode plates, and separators are then arranged according to a sequence of positive electrode plate-separator-negative electrode plate-separator, to laminate the positive electrode plates, the negative electrode plates, and the separators layer by layer to form a laminated battery core. The separator may be cut off and lamination is then directly performed by using a separating piece, or the separator is not cut off and lamination is performed in a Z-shaped lamination manner. The separator may be made of a material such as polypropylene (PP) or polyethylene (PE). The separator is an insulating film arranged between the positive electrode plate and the negative electrode plate and a main function thereof is: isolating a positive electrode from a negative electrode and stop electrons in the battery from passing through freely, to prevent short circuit, and enabling ions in an electrolyte to pass through freely between the positive electrode and negative electrode, to form a loop between the positive electrode and the negative electrode. The positive electrode plate and the negative electrode plate are collectively referred to as plates. The positive electrode tab and the negative electrode tab are collectively referred to as tabs.

An electrode terminal is arranged on a housing to be connected to the tabs of the electrode assembly, so as to output electrical energy of the battery cell or charge the battery cell.

To enable the battery cell to have a good structural strength, the housing is mostly made of a metal material, and to reduce a short circuit risk, an insulating member is generally arranged on a peripheral side of the electrode terminal on the housing, to insulate the housing from the electrode terminal. However, due to a volume limitation of the housing and the electrode terminal, the insulating member is only arranged between the electrode terminal and the housing, and a creepage distance between the electrode terminal and the housing is relatively small, which is prone to short circuit especially when an external conductive member is connected or conductive impurities fall on the housing during usage of the battery cell.

The creepage distance is a shortest distance measured along an insulating surface between two adjacent conductors or between a conductor and a surface of a housing of an adjacent motor.

Based on the foregoing concern, to resolve the problem of being prone to short circuit under the influence of an external conductive member caused by a small creepage distance between the housing and the electrode terminal, an embodiment of the present application provides a battery cell in which an insulating protection member is arranged to cover an outer surface of a fixing structure on a wall portion of a housing, so that the outer surface of the fixing structure is insulated and protected, and the isolation performance of the outer surface of the fixing structure is improved, thereby reducing the influence of the external conductive member; and an insertion portion is inserted between the fixing structure and an insulating member, so that a creepage distance between an electrode terminal and the fixing structure is increased, and the external conductive member can be better prevented from being inserted between the fixing structure and the electrode terminal, thereby improving the insulating safety and reducing a short circuit risk.

The battery cell disclosed in this embodiment of the present application may be used in a power consuming device using a battery as a power supply or various energy storage systems using a battery as an energy storage element, for example, used in an energy storage power supply system such as a hydraulic, thermal power, wind power, or solar power station. The power consuming device may be, but is not limited to, a mobile phone, a tablet computer, a notebook computer, an electric toy, an electric tool, an electric bicycle, an electric motorcycle, an electric vehicle, a ship, or a spacecraft. The electric toy may include a fixed or movable electric toy, for example, a game console, an electric vehicle toy, an electric ship toy, or an electric aircraft toy, and the spacecraft may include an aircraft, a rocket, a space shuttle, or a spaceship.

For ease of description, description is provided by using an example in which an embodiment of the present application provides a power consuming device and the power consuming device is a vehicle.

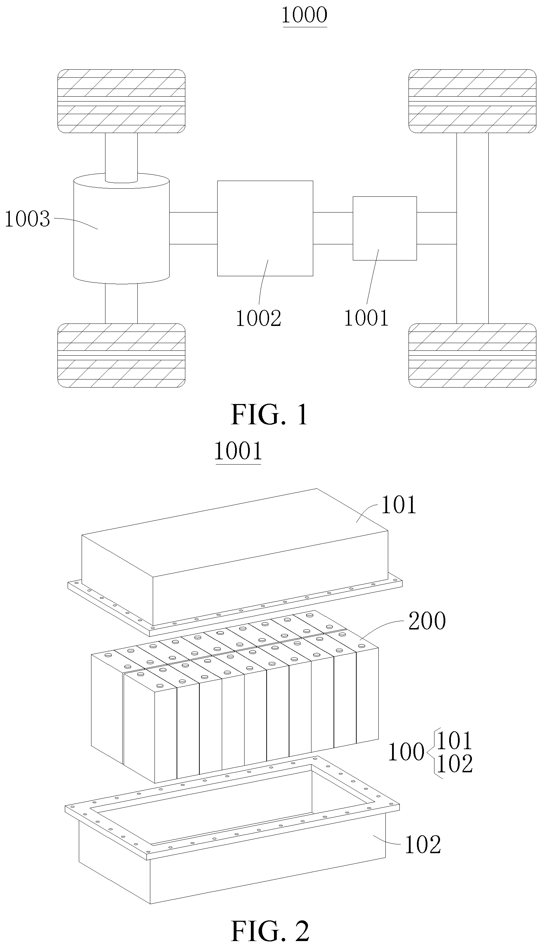

Referring to FIG. 1, FIG. 1 is a schematic structural diagram of a vehicle 1000 according to some embodiments of the present application. The vehicle 1000 may be a fuel powered vehicle, a gas powered vehicle, or a new energy vehicle. The new energy vehicle may be a pure electric vehicle, a hybrid electric vehicle, or an extended range vehicle. A battery 1001 is arranged inside the vehicle 1000, and the battery 1001 may be arranged at a bottom, head, or tail of the vehicle 1000. The battery 1001 may be configured to supply power to the vehicle 1000. For example, the battery 1001 may be used as an operating power supply of the vehicle 1000. The vehicle 1000 may further include a controller 1002 and a motor 1003. The controller 1002 is configured to control the battery 1001 to supply power to the motor 1003, for example, to meet operating electricity requirements during starting, navigation, and traveling of the vehicle 1000.

In some embodiments of the present application, the battery 1001 can not only be used as the operating power supply of the vehicle 1000, but can also be used as a driving power supply of the vehicle 1000, to alternatively or partially replace fuel or natural gas to provide driving power for the vehicle 1000.

Referring to FIG. 2, FIG. 2 is a schematic exploded structural view of a battery 1001 according to some embodiments of the present application. The battery 1001 includes a box 100 and a battery cell 200, where the battery cell 200 is accommodated in the box 100. The box 100 is configured to provide an accommodating space for the battery cell 200, and the box 100 may use a plurality of structures. In some embodiments, the box 100 may include a first part 101 and a second part 102, the first part 101 and the second part 102 cover each other, and the first part 101 and the second part 102 jointly define the accommodating space for accommodating the battery cell 200. The second part 102 may be a hollow structure being open on one side, the first part 101 may be a plate-like structure, and the first part 101 covers an open side of the second part 102, so that the first part 101 and the second part 102 jointly define the accommodating space. Alternatively, each of the first part 101 and the second part 102 may be a hollow structure being open on one side, and an open side of the first part 101 covers an open side of the second part 102. Certainly, the box 100 formed by the first part 101 and the second part 102 may be in various shapes, such as a cylinder or a cuboid. A plurality of battery cells 200 are connected in series, in parallel, or in series-parallel, and are then placed in the box 100 formed after the first part 101 and the second part 102 are buckled.

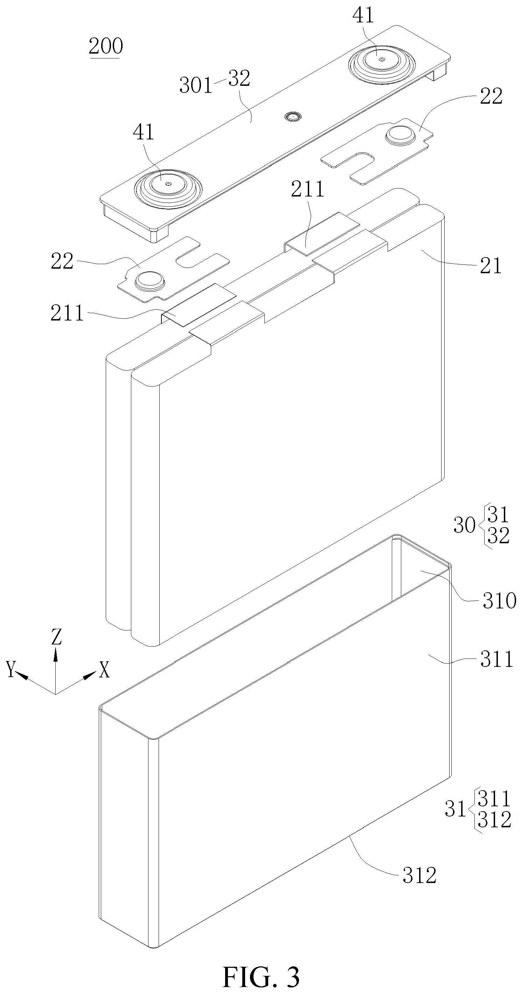

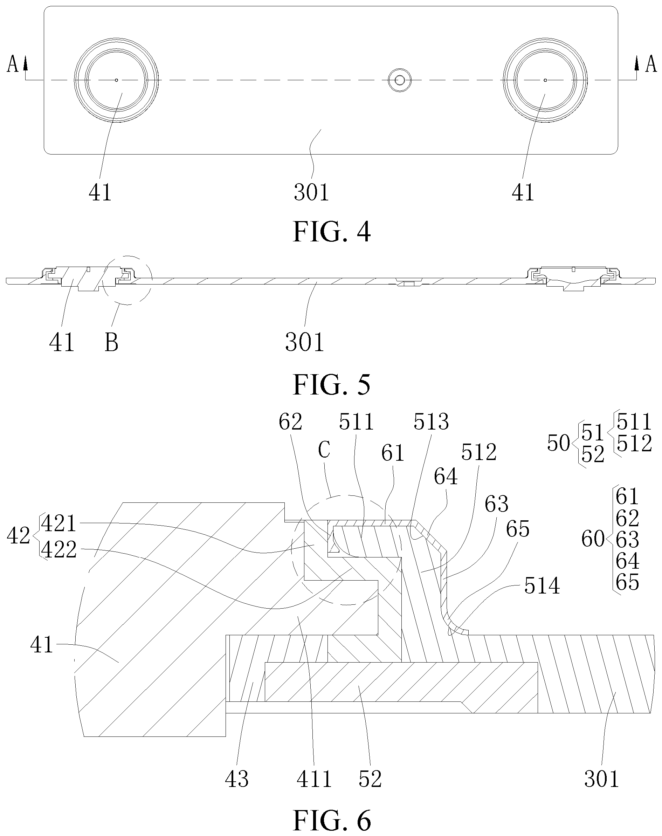

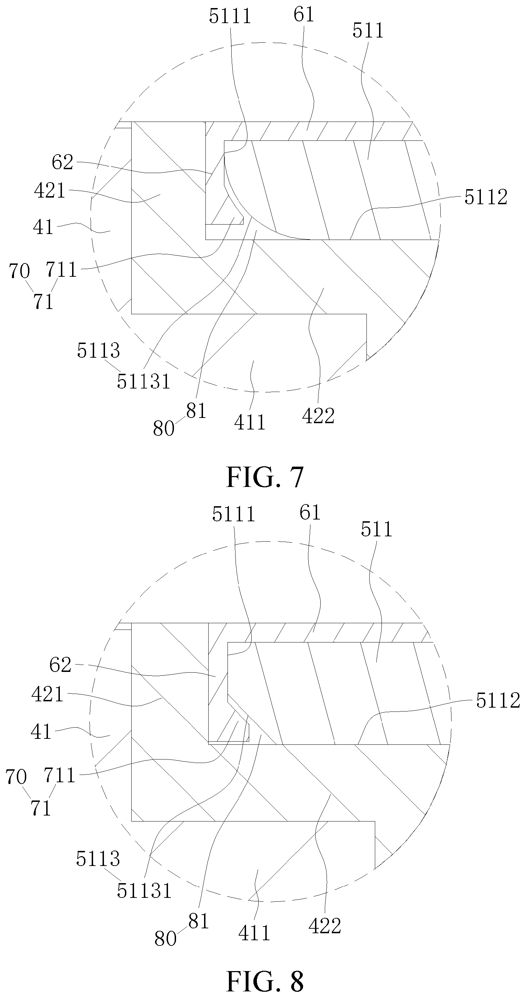

Referring to FIG. 3, FIG. 3 is a schematic exploded structural view of a battery cell 200 according to some embodiments of the present application. Further referring to FIG. 4 to FIG. 7, schematic structural diagrams of a connection part between an electrode terminal 41 and a wall portion 301 in a battery cell 200 according to some embodiments of the present application are shown. FIG. 4 is a schematic top structural view of mounting a wall portion 301 of an electrode terminal 41 on a housing according to some embodiments of the present application. FIG. 5 is a schematic cross-sectional structural view along a line A-A in FIG. 4. FIG. 6 is an enlarged view of a part B in FIG. 5. FIG. 7 is an enlarged view of a part C in FIG. 6.

An embodiment of the present application provides a battery cell 200, including: an electrode assembly 21; an electrode terminal 41, electrically connected to the electrode assembly 21; a housing 30, configured to accommodate the electrode assembly 21, where the housing 30 includes a wall portion 301 and a fixing structure 50, and the fixing structure 50 is fixedly arranged on the wall portion 301 and configured to fix the electrode terminal 41; an insulating member 42, arranged between the fixing structure 50 and the electrode terminal 41; and an insulating protection member 60, at least partially covering an outer surface of the fixing structure 50, where the insulating protection member 60 includes an insertion portion 62, and at least a part of the insertion portion 62 is inserted between the fixing structure 50 and the insulating member 42.

The electrode terminal 41 is a conductive member arranged on the wall portion 301, and the electrode terminal 41 is connected to a tab 211 of the electrode assembly 21, to output electrical energy of the battery cell 200 or charge the battery cell 200. Generally, the battery cell 200 includes two electrode terminals 41, and the two electrode terminals 41 are respectively connected to positive and negative electrode tabs 211 of the electrode assembly 21. That is, the housing 30 generally includes two electrode terminals 41, the two electrode terminals 41 are respectively connected to two groups of tabs 211, and the electrode terminals 41 are mounted on the wall portion 301 to support the electrode terminals 41 through the wall portion 301. Certainly, the battery cell 200 may further include other functional components.

The housing 30 is a shell structure having an accommodating space inside, and the electrode assembly 21 is at least partially placed in the housing 30, to protect the electrode assembly 21 through the housing 30.

The housing 30 includes the wall portion 301. The electrode terminal 41 is mounted on the wall portion 301 to support the electrode terminal 41 through the wall portion 301, and the electrode terminal 41 is electrically connected to the tab 211. The wall portion 301 is a partial region on the housing 30.

The fixing structure 50 is a structure configured to fix the electrode terminal 41. That the fixing structure 50 is fixedly arranged on the wall portion 301 refers to that the fixing structure 50 is connected to the wall portion 301 to support the fixing structure 50 through the wall portion 301. The fixing structure 50 is fixedly connected to the electrode terminal 41, to support the electrode terminal 41 through the fixing structure 50, so that the electrode terminal 41 is fixed to the wall portion 301.

The insulating member 42 is a component having an insulating characteristic. That the insulating member 42 is arranged between the fixing structure 50 and the electrode terminal 41 refers to that the insulating member 42 is arranged between the fixing structure 50 and the electrode terminal 41, to insulate and isolate the fixing structure 50 from the electrode terminal 41 through the insulating member 42. The insulating member 42 may be made of a material such as plastic, rubber, silicone, or bakelite that has an insulating characteristic.

The insulating protection member 60 is a structural member having an insulating characteristic. The insulating protection member 60 may be made of a material such as plastic, bakelite, or ceramic that has an insulating characteristic.

The outer surface of the fixing structure 50 is a surface of the fixing structure 50 facing away from the inside of the housing 30.

During use, the outer surface of the fixing structure 50 is located on an outer side of the battery cell 200, so that at least a part of the insulating protection member 60 covers the outer surface of the fixing structure 50. Therefore, the outer surface of the fixing structure 50 can be well insulated and protected, thereby improving the insulating protection performance.

The insertion portion 62 is a structural part protruding from the insulating protection member 60 toward the inside of the housing 30. Since the insulating member 42 is arranged between the fixing structure 50 and the electrode terminal 41, by inserting at least a part of the insertion portion 62 between the fixing structure 50 and the insulating member 42, a distance between the fixing structure 50 and the electrode terminal 41 can be increased, that is, a creepage distance between the electrode terminal 41 and the fixing structure 50 is increased, thereby improving the insulating safety. In addition, since at least a part of the insulating protection member 60 covers the outer surface of the fixing structure 50, a side of the fixing structure 50 close to the electrode terminal 41 can be insulated and wrapped, to further improve an insulating protection effect, so that the fixing structure 50 is less likely to be in short circuit contact with the electrode terminal 41, to reduce a short circuit risk.

In the technical solution of the embodiments of the present application, the insulating protection member 60 is arranged to cover the outer surface of the fixing structure 50, so that the outer surface of the fixing structure 50 is insulated and protected, and the insulation performance of the outer surface of the fixing structure 50 is improved, thereby reducing the influence of an external conductive member; and the insertion portion 62 is inserted between the fixing structure 50 and the insulating member 42, so that the creepage distance between the electrode terminal 41 and the fixing structure 50 is increased, and the external conductive member can be better prevented from being inserted between the fixing structure 50 and the electrode terminal 41, thereby improving the insulating safety and reducing a short circuit risk.

An inner surface of the wall portion 301 is a surface located inside the housing 30 on the wall portion 301, and an outer surface of the wall portion 301 is a surface opposite to the inner surface on the wall portion 301. The outer surface of the wall portion 301 and the inner surface of the wall portion 301 are two opposite surfaces of the wall portion 301.

As shown in FIG. 3, the battery cell 200 has a height direction, a width direction, and a thickness direction. In the figure, a direction Z is the height direction of the battery cell 200, a direction X is the width direction of the battery cell 200, and a direction Y is the thickness direction of the battery cell 200.

In some embodiments, the battery cell 200 may include one or more electrode assemblies 21. When one electrode assembly 21 is used, assembly is facilitated. When a plurality of electrode assemblies 21 are used, a battery level capacity of the battery cell 200 can be improved.

In some embodiments, the electrode assembly 21 may be totally placed in the housing 30, to well protect the electrode assembly 21 through the housing 30.

In some embodiments, the electrode assembly 21 may alternatively be partially placed in the housing 30. For example, when the electrode assembly 21 includes the tab 211, the tab 211 may protrude from the housing 30.

In some embodiments, the housing 30 may also be provided with a pressure relief mechanism configured to relieve internal pressure when the internal pressure or temperature in the battery cell 200 reaches a threshold.

In some embodiments, referring to FIG. 3, the battery cell 200 further includes two adapting pieces 22, the two adapting pieces 22 respectively correspond to the two electrode terminals 41, the adapting pieces 22 are connected to the corresponding electrode terminals 41, and the adapting pieces 22 are connected to the corresponding tabs 211. That is, the tabs 211 are connected to the corresponding electrode terminals 41 through the adapting pieces 22, so that connection between the tabs 211 and the electrode terminals 41 is facilitated, and the connection is more stable.

In some embodiments, the battery cell 200 may include one or more electrode assemblies 21. When one electrode assembly 21 is used, assembly is facilitated. When a plurality of electrode assemblies 21 are used, a battery level capacity of the battery cell 200 can be improved.

In some embodiments, the housing 30 includes a shell 31 and an end cap 32, one end of the shell 31 has an opening 310, the end cap 32 covers the opening 310, the shell 31 includes a side wall 311 and a bottom wall 312, the side wall 311 is annularly disposed on an outer side of the electrode assembly 21, and the bottom wall 312 and the opening 310 are arranged opposite to each other; and the wall portion 301 is at least a partial region of the end cap 32, or the wall portion 301 is at least a partial region of the bottom wall 312, or the wall portion 301 is at least a partial region of the side wall 311.

The end cap 32 is a component that covers the opening 310 of the shell 31 to isolate an internal environment of the battery cell 200 from an external environment. A shape of the end cap 32 may be adapted to a shape of the shell 31 to fit and cover the shell 31. Optionally, the end cap 32 may be made of a material with specified hardness and strength (for example, aluminum alloy), so that the end cap 32 is less likely to deform under extrusion and collision, enabling the battery cell 200 to have a higher structural strength and improved safety performance.

The shell 31 is a component configured to form the internal environment of the battery cell 200 together with the end cap 32, where the formed internal environment may be used for accommodating the electrode assembly 21, an electrolyte, and other components. The shell 31 and the end cap 32 may be independent components, the opening 310 may be provided on the shell 31, and the end cap 32 covers the opening 310 at the opening 310 to form the internal environment of the battery cell 200. The shell 31 may be of various shapes and sizes, such as a rectangular shape, a cylindrical shape, or a hexagonal prism shape. Specifically, the shape of the shell 31 may be determined according to a specific shape and size of the battery cell 200. The shell 31 may be made of various materials, and the materials include but are not limited to copper, iron, aluminum, stainless steel, aluminum alloy, or plastic.

The shell 31 includes the side wall 311 and the bottom wall 312, the side wall 311 and the bottom wall 312 encircle to form an accommodating space to accommodate the electrode assembly 21, and a side on the side wall 311 away from the bottom wall 312 forms the opening 310 of the shell 31 to place the electrode assembly 21. After the electrode assembly 21 is mounted, the side wall 311 surrounds the electrode assembly 21, the bottom wall 312 supports the electrode assembly 21, and the end cap 32 covers the opening 310.

The electrode terminal 41 may be mounted on the end cap 32, and a partial region on the end cap 32 configured to mount the electrode terminal 41 is the wall portion 301 supporting the electrode terminal 41. Certainly, the electrode terminal 41 may be mounted on the side wall 311, and a partial region on the side wall 311 configured to mount the electrode terminal 41 is the wall portion 301 supporting the electrode terminal 41. The electrode terminal 41 may alternatively be mounted on the bottom wall 312, and a partial region on the bottom wall 312 configured to mount the electrode terminal 41 is the wall portion 301 supporting the electrode terminal 41.

At least a partial region of the end cap 32 is used as the wall portion 301, or at least a partial region of the bottom wall 312 is used as the wall portion 301, or at least a partial region of the side wall 311 is used as the wall portion 301, so that a layout design of the electrode terminal 41 is facilitated.

Since the electrode terminal 41 is mounted on the end cap 32, manufacturing and assembly are relatively simple, mounting of the electrode terminal 41 is also facilitated, and connection between the electrode assembly 21 and the electrode terminal 41 is also facilitated. Detailed description is provided in the following embodiments by using an example in which a partial region of the end cap 32 is used as the wall portion 301 of the electrode terminal 41.

When the insulating protection member 60 is mounted on the fixing structure 50, a surface of the insulating protection member 60 close to the fixing structure 50 is generally viscous. For example, glue is coated on or an adhesive layer is arranged on the surface of the insulating protection member 60 close to the fixing structure 50, so that the insulating protection member 60 is bonded to the fixing structure 50, thereby preventing the insulating protection member 60 from falling off. However, since the insertion portion 62 is inserted between the fixing structure 50 and the insulating member 42, when the insertion portion 62 is inserted between the fixing structure 50 and the insulating member 42, the insertion portion encounters relatively large resistance, which is inconvenient for insertion, and a position of the insulating protection member 60 close to the insertion portion 62 may even tilt up. As a result, bonding between the insulating protection member 60 and the fixing structure 50 is not firm, and the quality of the battery cell 200 is affected.

In some embodiments, referring to FIG. 6 and FIG. 7, the insertion portion 62 has a non-sticking characteristic.

That the insertion portion 62 has a non-sticking characteristic refers to that the insertion portion 62 is not viscous, that is, no glue is coated on or no adhesive layer is arranged on the insertion portion 62, and the insertion portion 62 is not bonded to the fixing structure 50 and the insulating member 42. The insertion portion 62 has a non-sticking characteristic, so that the insertion portion 62 can be inserted between the fixing structure 50 and the insulating member 42, thereby facilitating assembly, and the insulating protection member 60 can better fit and cover the outer surface of the fixing structure 50.

In some embodiments, referring to FIG. 6 and FIG. 7, the fixing structure 50 includes a first fixing structure 51 and a second fixing structure 52, at least one of the first fixing structure 51 and the second fixing structure 52 is fixedly connected to the wall portion 301, the first fixing structure 51 is located on an inner side of the second fixing structure 52 away from the housing 30 in a thickness direction of the wall portion 301, the first fixing structure 51 cooperates with the second fixing structure 52 to clamp and fix the electrode terminal 41, at least a part of the insulating protection member 60 covers an outer surface of the first fixing structure 51, and at least a part of the insertion portion 62 is inserted between the first fixing structure 51 and the insulating member 42.

The first fixing structure 51 is a structural component fixed and supported on the wall portion 301 and configured to fix and support the electrode terminal 41.

The second fixing structure 52 is a structural component fixed and supported on the wall portion 301 and configured to cooperate with the first fixing structure 51 to fix and support the electrode terminal 41.

That at least one of the first fixing structure 51 and the second fixing structure 52 is fixedly connected to the wall portion 301 refers to that the first fixing structure 51 is directly fixedly connected to the wall portion 301, or the second fixing structure 52 is directly fixedly connected to the wall portion 301, or both the first fixing structure 51 and the second fixing structure 52 are directly fixedly connected to the wall portion 301, to support the first fixing structure 51 and the second fixing structure 52 through the wall portion 301, so that the fixing structure 50 is fixed and supported.

The first fixing structure 51 is located on the inner side of the second fixing structure 52 away from the housing 30 in the thickness direction of the wall portion 301, so that the outer surface of the first fixing structure 51 is the outer surface of the entire fixing structure 50. That is, during use, the outer surface of the first fixing structure 51 is located on the outer side of the battery cell 200, the outer surface of the first fixing structure 51 is prone to the influence of the external conductive member, leading to a risk that the first fixing structure is short circuited with the electrode terminal 41.

The first fixing structure 51 cooperates with the second fixing structure 52 to clamp and fix the electrode terminal 41. That is, the first fixing structure 51 and the second fixing structure 52 clamp a partial region of the electrode terminal 41 to fix the electrode terminal 41, so as to fix the electrode terminal 41 on the wall portion 301. The first fixing structure 51 and the second fixing structure 52 are arranged to clamp the electrode terminal 41 through cooperation, so that mounting and fixing of the electrode terminal 41 are facilitated, thereby facilitating assembly of the electrode terminal 41.

At least a part of the insulating protection member 60 covers the outer surface of the first fixing structure 51. Therefore, the outer surface of the first fixing structure 51 can be well insulated and protected, thereby improving the insulating protection performance. By inserting at least a part of the insertion portion 62 between the first fixing structure 51 and the insulating member 42, a distance between the first fixing structure 51 and the electrode terminal 41 can be increased, that is, a creepage distance between the electrode terminal 41 and the first fixing structure 51 is increased, thereby improving the insulating safety. In addition, since at least a part of the insulating protection member 60 covers the outer surface of the first fixing structure 51, a side of the first fixing structure 51 close to the electrode terminal 41 can be insulated and wrapped, to further improve the insulating protection performance, so that the first fixing structure 51 is less likely to be in short circuit contact with the electrode terminal 41, to reduce a short circuit risk, thereby further improving the insulating protection performance of the entire battery cell 200.

In some embodiments, for ease of mounting and fixing of the electrode terminal 41, a flange portion 411 is arranged on a peripheral side of the electrode terminal 41, and the flange portion 411 is a boss structure arranged on the peripheral side of the electrode terminal 41. The flange portion 411 is arranged for ease of fixing to the wall portion 301. By arranging the first fixing structure 51 and the second fixing structure 52, the flange portion 411 on the peripheral side of the electrode terminal 41 may be clamped by the first fixing structure 51 and the second fixing structure 52 through cooperation, so that the electrode terminal 41 is fixed.

In some embodiments, the first fixing structure 51 may be set to an annular shape, to cooperate with the second fixing structure 52 to clamp and fix the electrode terminal 41.

In some embodiments, the second fixing structure 52 may be set to an annular shape, to cooperate with the first fixing structure 51 to clamp and fix the electrode terminal 41.

In some embodiments, the insulating member 42 may be arranged in cooperation with the peripheral side surrounding the electrode terminal 41, to better insulate and isolate the electrode terminal 41 from the fixing structure 50 and the wall portion 301, thereby improving the insulating protection performance. It may be understood that the insulating member 42 may alternatively be arranged only between the fixing structure 50 and the electrode terminal 41.

In some embodiments, referring to FIG. 6 and FIG. 7, the first fixing structure 51 includes a connection portion 512 and a clamping portion 511; and in the thickness direction of the wall portion 301, the clamping portion 511 and the second fixing structure 52 are arranged opposite to each other, and the connection portion 512 is located between the clamping portion 511 and the second fixing structure 52; the insulating member 42 includes a first insulating portion 421 and a second insulating portion 422, at least a part of the first insulating portion 421 is located between the clamping portion 511 and the electrode terminal 41 in the thickness direction of the wall portion 301, at least a part of the second insulating portion 422 is located between the clamping portion 511 and the electrode terminal 41 in a first direction, and the first direction is a direction pointing from the clamping portion 511 to the electrode terminal 41 and perpendicular to the thickness direction of the wall portion 301; and at least a part of the insertion portion 62 is located between the first insulating portion 421 and the clamping portion 511.

The clamping portion 511 is a partial structure that is on the first fixing structure 51 and cooperates with the second fixing structure 52 to clamp the electrode terminal 41. The clamping portion 511 and the second fixing structure 52 are arranged opposite to each other, to clamp and fix the electrode terminal 41. The connection portion 512 is a partial structure of the first fixing structure 51 for connecting the clamping portion 511 and the wall portion 301, the clamping portion 511 is supported on the wall portion 301 through the connection portion 512, and the connection portion 512 is located between the clamping portion 511 and the second fixing structure 52, to fixedly connect the clamping portion 511 to the second fixing structure 52.

The connection portion 512 is arranged in a manner of extending from the wall portion 301 toward a direction away from the inner surface of the wall portion 301, the clamping portion 511 is arranged in a manner of extending from an end of the connection portion 512 away from the wall portion 301 toward a direction of the electrode terminal 41, so that the connection portion 512 supports the clamping portion 511, and the clamping portion 511 cooperates with the second fixing structure 52 to clamp the electrode terminal 41.

The insulating member 42 includes the first insulating portion 421 and the second insulating portion 422, and the first insulating portion 421 is a partial structure on the insulating member 42. The second insulating portion 422 is a partial structure on the insulating member 42.

That at least a part of the first insulating portion 421 is located between the clamping portion 511 and the electrode terminal 41 in the thickness direction of the wall portion 301 refers to that: the first insulating portion 421 totally or partially extends in the thickness direction of the wall portion 301 and is located between the clamping portion 511 and the electrode terminal 41.

That at least a part of the second insulating portion 422 is located between the clamping portion 511 and the electrode terminal 41 in a first direction refers to that: the second insulating portion 422 totally or partially extends in the first direction and is located between the clamping portion 511 and the electrode terminal 41.

That the first direction is a direction pointing from the clamping portion 511 to the electrode terminal 41 and perpendicular to the thickness direction of the wall portion 301 refers to that: the first direction is a direction from the clamping portion 511 to the electrode terminal 41 and a direction perpendicular to the thickness direction of the wall portion 301.

By arranging the first insulating portion 421, the clamping portion 511 can be insulated and isolated from the electrode terminal 41 along an end surface in the first direction, and the second insulating portion 422 insulates and isolates a surface of the clamping portion 511 close to the second fixing structure 52 from the electrode terminal 41, so that the electrode terminal is well insulated and protected.

That at least a part of the insertion portion 62 is located between the first insulating portion 421 and the clamping portion 511 refers to that: the insertion portion 62 totally or partially extends into a space between the first insulating portion 421 and the clamping portion 511, to improve the insulating protection performance of the clamping portion 511.

In some embodiments, referring to FIG. 6 and FIG. 7, the insertion portion 62 is provided with a first engagement portion 70, a second engagement portion 80 is arranged between the first fixing structure 51 and the insulating member 42, and the first engagement portion 70 is in engagement fit with the second engagement portion 80.

The first engagement portion 70 is a structure portion arranged on the insertion portion 62 and configured for engagement.

The second engagement portion 80 is a structure portion arranged between the first fixing structure 51 and the insulating member 42 and configured for engagement with the first engagement portion 70.

The first engagement portion 70 is arranged on the insertion portion 62, the second engagement portion 80 is arranged between the first fixing structure 51 and the insulating member 42, and the insertion portion 62 is fixed through engagement fit between the first engagement portion 70 and the second engagement portion 80, so that the insertion portion 62 can be better prevented from falling off, and the insulating protection member 60 and the first fixing structure 51 can be better fitted and fixed.

In some embodiments, referring to FIG. 6 and FIG. 7, the first engagement portion 70 includes a limiting protrusion 71, the second engagement portion 80 includes an accommodating gap 81 formed between the first fixing structure 51 and the second insulating portion 422, and at least a part of the limiting protrusion 71 is accommodated in the accommodating gap 81.

The limiting protrusion 71 is a protruding structure arranged on the insertion portion 62, and as shown in FIG. 7, the limiting protrusion 71 may be a bump structure 711 protruding from the insertion portion 62.

The accommodating gap 81 is a gap space formed between the first fixing structure 51 and the second insulating portion 422.

That at least a part of the limiting protrusion 71 is accommodated in the accommodating gap 81 refers to that: the limiting protrusion 71 totally or partially extends into the accommodating gap 81, to position the limiting protrusion 71.

The accommodating gap 81 is provided between the first fixing structure 51 and the second insulating portion 422, the limiting protrusion 71 is arranged on the insertion portion 62, and the limiting protrusion 71 is accommodated through the accommodating gap 81, so that the insertion portion 62 is clamped and positioned, and a structure is simple and easy to process and manufacture.

In some embodiments, referring to FIG. 6 and FIG. 7, the clamping portion 511 has a first end surface 5111 facing the first insulating portion 421, the clamping portion 511 has a second end surface 5112 facing the second insulating portion 422, the first end surface 5111 and the second end surface 5112 are connected through a first transition surface 5113, the first transition surface 5113 is a rounded surface 51131, and the first transition surface 5113 and the second insulating portion 422 are spaced apart to form the accommodating gap 81.

The first end surface 5111 is an end surface of the clamping portion 511 facing the first insulating portion 421. The second end surface 5112 is an end surface of the clamping portion 511 facing the second insulating portion 422.

The first transition surface 5113 is a surface of the clamping portion 511 connecting the first end surface 5111 and the second end surface 5112 in a transition manner.

That the first transition surface 5113 is a rounded surface 51131 refers to that the rounded surface 51131 is arranged between the first end surface 5111 and the second end surface 5112 on the clamping portion 511, to form the first transition surface 5113. Due to arrangement of the rounded surface 51131, the rounded surface 51131 is isolated from the second insulating portion 422, so that the rounded surface 51131 and the second insulating portion 422 are spaced apart to form the accommodating gap 81. In this way, the limiting protrusion 71 may partially or totally extend into the accommodating gap 81, to stop and position the limiting protrusion 71 through the rounded surface 51131.

The rounded surface 51131 is arranged on the clamping portion 511 to form the first transition surface 5113, so that a structure is simple and easy to manufacture.

In some embodiments, referring to FIG. 8, the clamping portion 511 has a first end surface 5111 facing the first insulating portion 421, the clamping portion 511 has a second end surface 5112 facing the second insulating portion 422, the first end surface 5111 and the second end surface 5112 are connected through a first transition surface 5113, the first transition surface 5113 is a chamfered surface 51132, and the first transition surface 5113 and the second insulating portion 422 are spaced apart to form the accommodating gap 81.

That the first transition surface 5113 is a chamfered surface 51132 refers to that the chamfered surface 51132 is arranged between the first end surface 5111 and the second end surface 5112 on the clamping portion 511, to form the first transition surface 5113. Due to arrangement of the chamfered surface 51132, the chamfered surface 51132 is isolated from the second insulating portion 422, so that the chamfered surface 51132 and the second insulating portion 422 are spaced apart to form the accommodating gap 81. In this way, the limiting protrusion 71 may partially or totally extend into the accommodating gap 81, to stop and position the limiting protrusion 71 through the chamfered surface 51132.

The chamfered surface 51132 is arranged on the clamping portion 511 to form the first transition surface 5113, so that a structure is simple and easy to manufacture.

In some embodiments, the clamping portion 511 and the second insulating portion 422 may alternatively be spaced apart to form the accommodating gap 81, so as to accommodate the limiting protrusion 71.

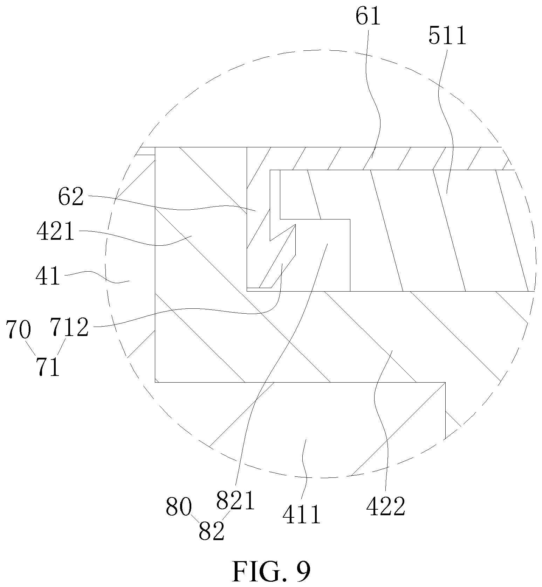

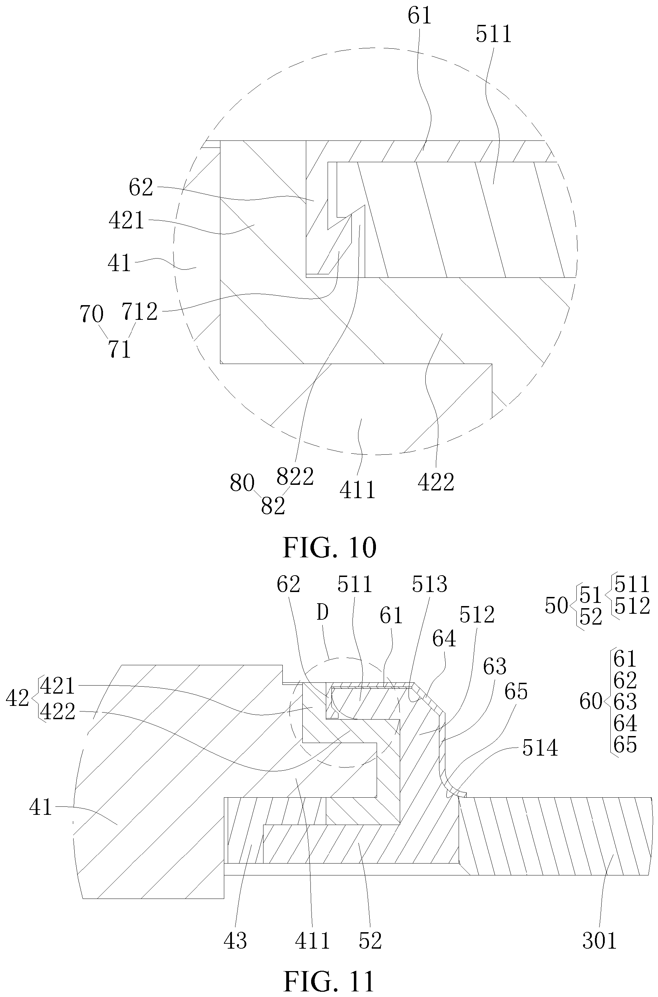

In some embodiments, referring to FIG. 9 and FIG. 10, the first engagement portion 70 includes a limiting protrusion 71, the second engagement portion 80 is arranged on at least one of the first fixing structure 51 and the insulating member 42, the second engagement portion 80 includes a limiting groove 82, and at least a part of the limiting protrusion 71 is accommodated in the limiting groove 82.

The limiting protrusion 71 is a protruding structure arranged on the insertion portion 62, and as shown in FIG. 9, the limiting protrusion 71 may be a hook 712 arranged on the insertion portion 62 in a protruding manner.

The limiting groove 82 is a groove body structure arranged on at least one of the first fixing structure 51 and the insulating member 42. Referring to FIG. 9, the limiting groove 82 may be a recessed groove 821 provided on the first fixing structure 51. Referring to FIG. 10, the limiting groove 82 may alternatively be a clamping slot 822 provided on the first fixing structure 51. Certainly, the limiting groove 82 may alternatively be provided on the insulating member 42, or the limiting groove 82 is provided on both the insulating member 42 and the first fixing structure 51.

A position of the limiting protrusion 71 corresponds to the limiting groove 82. For example, the limiting groove 82 is provided on the first fixing structure 51, and the limiting protrusion 71 on the insertion portion 62 is located on a side of the insertion portion 62 close to the first fixing structure 51, to extend into the limiting groove 82 on the first fixing structure 51. For another example, the limiting groove 82 is provided on the insulating member 42, and the limiting protrusion 71 on the insertion portion 62 is located on a side of the insertion portion 62 close to the insulating member 42, to extend into the limiting groove 82 on the first fixing structure 51. For another example, when the limiting groove 82 is provided on both the insulating member 42 and the first fixing structure 51, the limiting protrusion 71 may be arranged on the side of the insertion portion 62 close to the first fixing structure 51 and the side of the insertion portion close to the insulating member 42.

The limiting groove 82 is provided on at least one of the first fixing structure 51 and the insulating member 42, the limiting protrusion 71 is arranged on the insertion portion 62, and the limiting protrusion 71 is accommodated through the limiting groove 82, so that the insertion portion 62 is clamped and fixed, and a structure is simple and easy to process and manufacture.

In some embodiments, referring to FIG. 6, the insulating protection member 60 includes a first coverage portion 61 covering an outer surface of the clamping portion 511, and the insertion portion 62 is connected to the first coverage portion 61.

The outer surface of the clamping portion 511 is a surface of a side of the clamping portion 511 away from the second fixing structure 52.

The first coverage portion 61 is a partial structure covering the outer surface of the clamping portion 511. The insertion portion 62 is connected to the first coverage portion 61, to support the insertion portion 62 through the first coverage portion 61.

The first coverage portion 61 is arranged to cover the outer surface of the clamping portion 511, and the insertion portion 62 is connected to the first coverage portion 61, so that the outer surface of the clamping portion 511 and a surface close to the electrode terminal 41 are well insulated and protected, thereby improving the insulation performance.

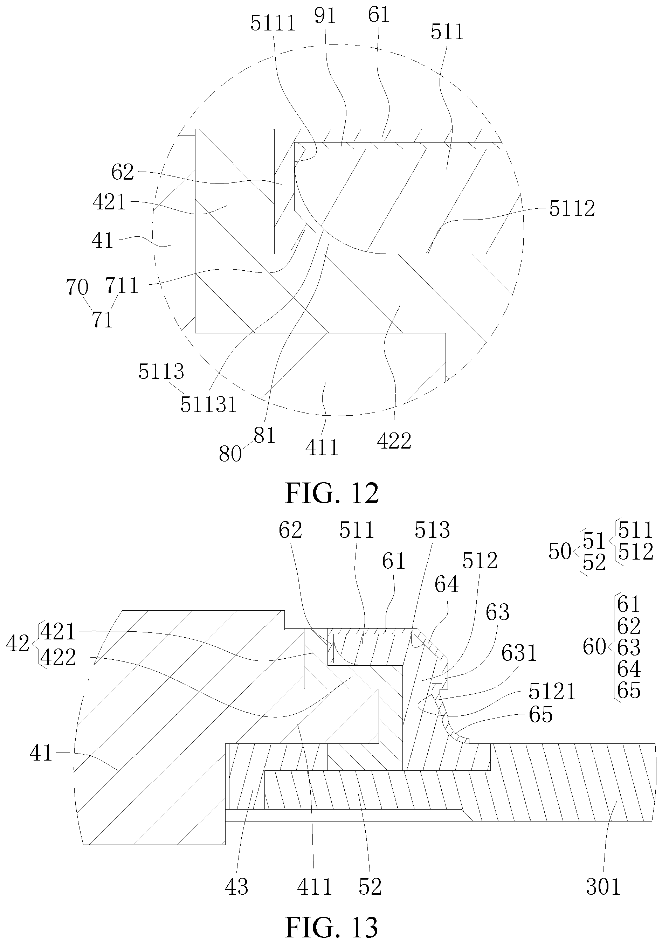

Referring to FIG. 11 and FIG. 12, FIG. 11 is a schematic cross-sectional structural view of a connection part between an electrode terminal 41 and a wall portion 301 on a housing 30 according to some embodiments of the present application. FIG. 12 is an enlarged view of a part D in FIG. 11.

In some embodiments, the first coverage portion 61 is bonded to the clamping portion 511.

That the first coverage portion 61 is bonded to the clamping portion 511 refers to that the first coverage portion 61 is fixedly connected to the clamping portion 511 in a bonding manner.

The first coverage portion 61 is bonded to the clamping portion 511, so that the clamping portion 511 is insulated and protected, and the connection and fixing between the first coverage portion 61 and the clamping portion 511 are facilitated, thereby facilitating connection and fixing between the insulating protection member 60 and the first fixing structure 51.

In some embodiments, a first adhesive layer 91 may be arranged on a surface of the first coverage portion 61 close to the clamping portion 511, so that the first coverage portion 61 is bonded to the outer surface of the clamping portion 511 through the first adhesive layer 91, thereby facilitating assembly.

In some embodiments, an adhesive layer may alternatively be arranged and coated on a side of the first coverage portion 61 close to the outer surface of the clamping portion 511, so that the first coverage portion is bonded to the outer surface of the clamping portion 511, thereby facilitating assembly.

In some embodiments, the first coverage portion 61 may alternatively be welded to the outer surface of the clamping portion 511. For example, the first coverage portion 61 is welded to the outer surface of the clamping portion 511 in an ultrasonic welding manner, to ensure that the first coverage portion 61 is firmly connected to the clamping portion 511.

In some embodiments, an engagement structure may be further arranged on the first coverage portion 61, and a matching buckling structure is arranged on the clamping portion 511, so that the first coverage portion 61 is connected to the clamping portion 511 in an engagement manner. For example, a bulge may be arranged on the first coverage portion 61, and a latching groove is provided on the clamping portion 511 for clamping and connection.

In some embodiments, referring to FIG. 11, the insulating protection member 60 further includes a second coverage portion 63 attached against an outer surface of the connection portion 512, and the second coverage portion 63 is connected to the first coverage portion 61.

The outer surface of the connection portion 512 is a surface of a side of the connection portion 512 away from the electrode terminal 41.

The second coverage portion 63 is a partial region corresponding to the connection portion 512 on the insulating protection member 60. The second coverage portion 63 is arranged and attached against the outer surface of the connection portion 512, so that the connection portion 512 can be insulated and protected, thereby better improving the insulating protection performance. In addition, the arrangement of the second coverage portion 63 can cooperate with the insertion portion 62, so that the second coverage portion is better connected and fixed to the first fixing structure 51.

In some embodiments, a second transition surface 513 is arranged between the outer surface of the clamping portion 511 and the outer surface of the connection portion 512, and the second transition surface 513 may be an inclined surface or may be an arc surface, thereby facilitating processing and manufacturing of the first fixing structure 51.

In some embodiments, when the first fixing structure 51 includes the second transition surface 513, the insulating protection member 60 further includes a first transition portion 64, the first transition portion 64 connects the first coverage portion 61 to the second coverage portion 63, and a shape of the first transition portion 64 matches a shape of the second transition surface 513, so that the first transition portion 64 is attached against the second transition surface 513, thereby insulating and protecting the second transition surface 513.

In some embodiments, a surface of the second coverage portion 63 close to the connection portion 512 has a non-sticking characteristic.

That a surface of the second coverage portion 63 close to the connection portion 512 has a non-sticking characteristic refers to that the surface of the second coverage portion 63 close to the connection portion 512 is not viscous. That is, no glue is coated on or no adhesive layer is arranged on the surface of the second coverage portion 63 close to the connection portion 512, and the surface of the second coverage portion 63 close to the connection portion 512 is not bonded to the connection portion 512. The surface of the second coverage portion 63 close to the connection portion 512 has the non-sticking characteristic, so that matching and connection between the second coverage portion 63 and the connection portion 512 are facilitated for ease of assembly, and the insulating protection member 60 can better fit and cover the outer surface of the first fixing structure 51.

Referring to FIG. 13, FIG. 13 is a schematic cross-sectional structural view of a connection portion 512 between an electrode terminal 41 and a wall portion 301 on a housing 30 according to some embodiments of the present application.

In some embodiments, a first clamping protrusion 631 is arranged on the second coverage portion 63, and a first clamping groove 5121 that is engaged with the first clamping protrusion 631 is provided on the connection portion 512.

The first clamping protrusion 631 is a protruding structure arranged on the second coverage portion 63. The first clamping protrusion 631 is arranged in a manner of protruding from the second coverage portion 63 toward the connection portion 512. The first clamping groove 5121 is a groove structure arranged on the connection portion 512. The first clamping groove 5121 is formed by a surface of the connection portion 512 away from the electrode terminal 41 recessing inward. The first clamping groove 5121 matches the first clamping protrusion 631.

The first clamping protrusion 631 is arranged on the second coverage portion 63, and the first clamping groove 5121 is provided on the connection portion 512, so that the second coverage portion 63 can be fixedly connected to the connection portion 512 through engagement between the first clamping protrusion 631 and the first clamping groove 5121, and the second coverage portion is further engaged with the insertion portion 62, to fix the insulating protection member 60 on the first fixing structure 51, thereby facilitating assembly and fixing.

In some embodiments, a partial region on the second coverage portion 63 can protrude or bend toward the connection portion 512 to form the first clamping protrusion 631. Certainly, the first clamping protrusion 631 may alternatively be arranged on the second coverage portion 63.

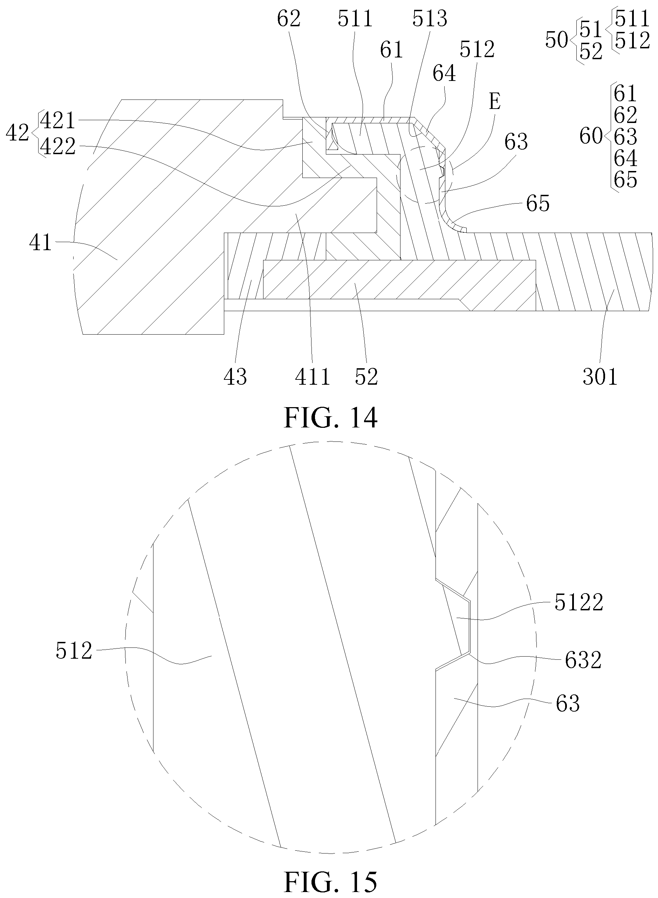

Referring to FIG. 14 and FIG. 15, FIG. 14 is a schematic cross-sectional structural view of a connection part between an electrode terminal 41 and a wall portion 301 on a housing 30 according to some embodiments of the present application. FIG. 15 is an enlarged view of a part E in FIG. 14.

In some embodiments, a first engagement groove 632 may be provided on the second coverage portion 63, and a first engagement protrusion 5122 that is engaged with the first engagement groove 632 is arranged on the connection portion 512.

The first engagement groove 632 is a groove structure arranged on the second coverage portion 63. The first engagement protrusion 5122 is a protruding structure arranged on the connection portion 512. The first engagement groove 632 matches the first engagement protrusion 5122.

The first engagement groove 632 is provided on the second coverage portion 63, and the first engagement protrusion 5122 is arranged on the connection portion 512, so that the second coverage portion 63 can be fixedly connected to the connection portion 512 through engagement between the first engagement protrusion 5122 and the first engagement groove 632, and the second coverage portion is further engaged with the insertion portion 62, to fix the insulating protection member 60 on the first fixing structure 51, thereby facilitating assembly and fixing.

In some embodiments, both the first clamping protrusion 631 and the first engagement groove 632 may be provided on the second coverage portion 63, the first clamping groove 5121 that is engaged with the first clamping protrusion 631 is provided on the connection portion 512, and the first engagement protrusion 5122 that is engaged with the first engagement groove 632 is arranged on the connection portion 512.

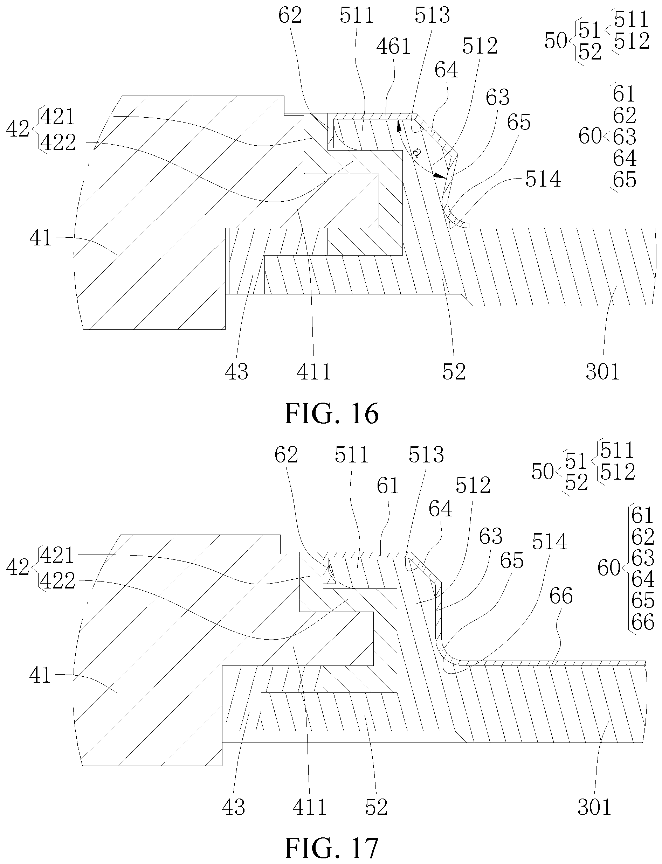

Referring to FIG. 16, FIG. 16 is a schematic cross-sectional structural view of a connection portion between an electrode terminal 41 and a wall portion 301 on a housing 30 according to some embodiments of the present application.

In some embodiments, an angle a between the second coverage portion 63 and the first coverage portion 61 is an acute angle.

The angle a between the second coverage portion 63 and the first coverage portion 61 is an angle between a surface on which the second coverage portion 63 is located and a surface on which the first coverage portion 61 is located. The angle a between the second coverage portion 63 and the first coverage portion 61 is an acute angle, so that the second coverage portion 63 can cooperate with the insertion portion 62 to clamp the first fixing structure 51, and the insulating protection member 60 is further connected to the first fixing structure 51, thereby facilitating assembly.

In some embodiments, the second coverage portion 63 may be arranged in a manner of extending toward the electrode terminal 41 in a direction from the clamping portion 511 to the second fixing structure 52, so that the angle a between the second coverage portion 63 and the first coverage portion 61 forms an acute angle.

In some embodiments, the surface of the connection portion 512 away from the electrode terminal 41 is recessed inward to match the second coverage portion 63, so that the second coverage portion 63 is in engagement fit with the connection portion 512, and the insulating protection member 60 is better fixed onto the first fixing structure 51.

Referring to FIG. 17, FIG. 17 is a schematic cross-sectional structural view of a connection portion between an electrode terminal 41 and a wall portion 301 on a housing 30 according to some embodiments of the present application.

In some embodiments, the insulating protection member 60 further includes an extension portion 66 covering an outer surface of the wall portion 301, and the extension portion 66 is connected to the second coverage portion 63.

The extension portion 66 is a partial structure on the insulating protection member 60 extending from the second coverage portion 63 to the outer surface of the wall portion 301.

The extension portion 66 is arranged to extend from the second coverage portion 63 to the outer surface of the wall portion 301, so that an insulating protection effect can be better achieved.

In some embodiments, a third transition surface 514 is arranged between the outer surface of the connection portion 512 and the outer surface of the wall portion 301, and the third transition surface 514 may be an inclined surface or may be an arc surface, thereby facilitating processing and manufacturing of the first fixing structure 51 and connection and fixing between the first fixing structure 51 and the wall portion 301.

In some embodiments, when the first fixing structure 51 includes the third transition surface 514, the insulating protection member 60 further includes a second transition portion 65, the second transition portion 65 is connected to the second coverage portion 63, and a shape of the second transition portion 65 matches a shape of the third transition surface 514, so that the second transition portion 65 is attached against the third transition surface 514, thereby insulating and protecting the third transition surface 514.

In some embodiments, when the insulating protection member 60 includes the extension portion 66 and the second transition portion 65, the extension portion 66 is connected to the second transition portion 65. That is, the second transition portion 65 is located between the extension portion 66 and the second coverage portion 63, and the second transition portion 65 connects the extension portion 66 to the second coverage portion 63, so that the insulating protection member 60 can well cooperate with the first fixing structure 51, and the extension portion 66 is transitioned and attached to the wall portion 301.

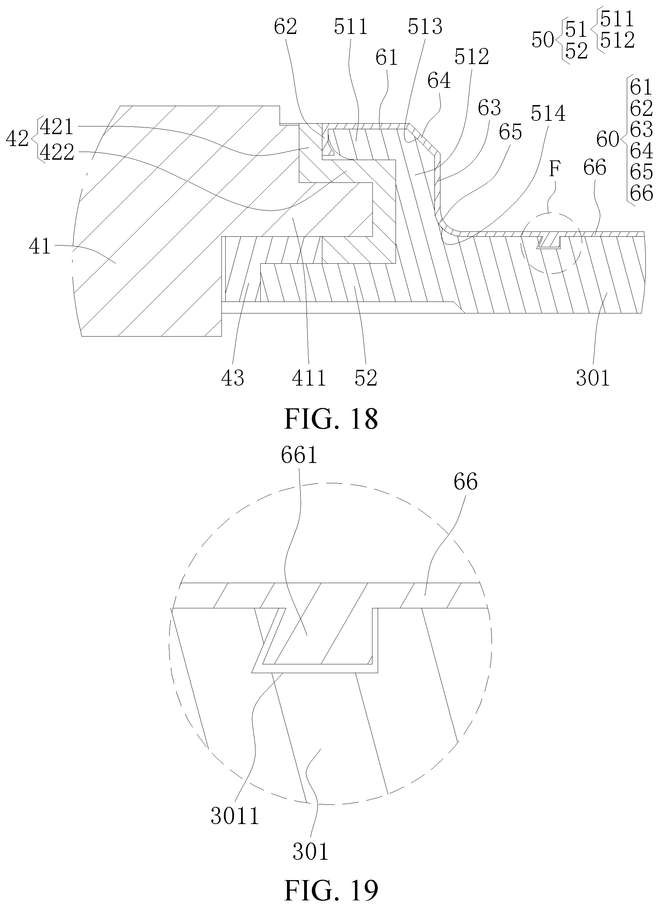

Referring to FIG. 18 and FIG. 19, FIG. 18 is a schematic cross-sectional structural view of a connection part between an electrode terminal 41 and a wall portion 301 on a housing 30 according to some embodiments of the present application. FIG. 19 is an enlarged view of a part F in FIG. 18.

In some embodiments, a second clamping protrusion 661 is arranged on the extension portion 66, and a second clamping groove 3011 that is engaged with the second clamping protrusion 661 is provided on the wall portion 301.

The second clamping protrusion 661 is a protruding structure arranged on the extension portion 66. The second clamping protrusion 661 is arranged in a manner of protruding from the extension portion 66 toward the wall portion 301. The second clamping groove 3011 is a groove structure arranged on the wall portion 301. The second clamping groove 3011 is formed by the outer surface of the wall portion 301 recessing inward. The second clamping groove 3011 matches the second clamping protrusion 661.

The second clamping protrusion 661 is arranged on the extension portion 66, and the second clamping groove 3011 is provided on the wall portion 301, so that the extension portion 66 is fixedly connected to the wall portion 301 through engagement between the second clamping protrusion 661 and the second clamping groove 3011, and the extension portion is further engaged with the insertion portion 62, to fix the insulating protection member 60, thereby facilitating assembly and fixing.

In some embodiments, a partial region on the extension portion 66 can protrude or bend toward the wall portion 301 to form the second clamping protrusion 661. Certainly, the second clamping protrusion 661 may alternatively be arranged on the extension portion 66.

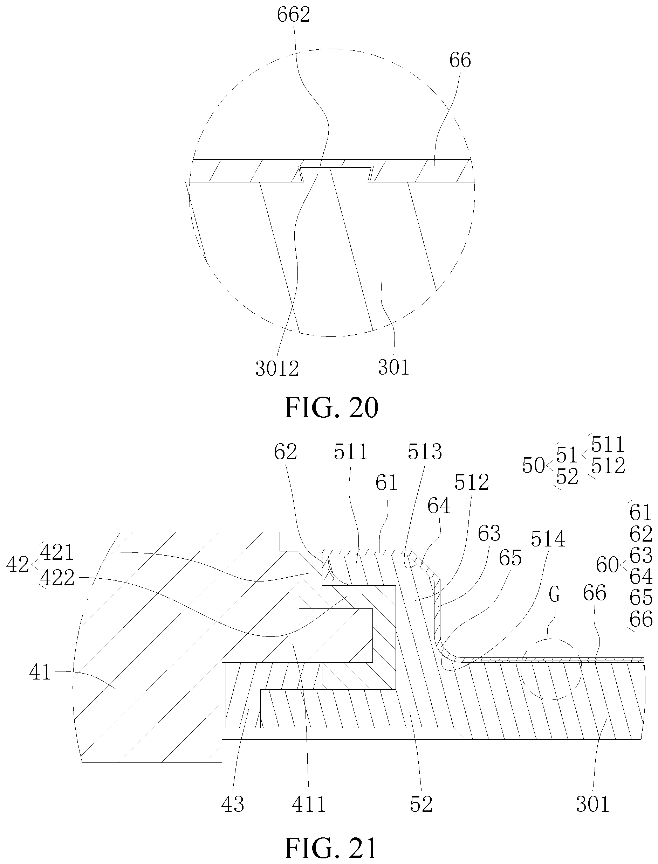

Referring to FIG. 20, FIG. 20 is a schematic structural diagram of connection between an extension portion 66 and a wall portion 301 on a housing 30 according to some embodiments of the present application.

In some embodiments, a second engagement groove 662 is provided on the extension portion 66, and a second engagement protrusion 3012 that is engaged with the second engagement groove 662 is arranged on the wall portion 301.

The second engagement groove 662 is a groove structure arranged on the extension portion 66. The second engagement protrusion 3012 is a protruding structure arranged on the wall portion 301. The second engagement groove 662 matches the second engagement protrusion 3012.

The second engagement groove 662 is provided on the extension portion 66, and the second engagement protrusion 3012 is arranged on the wall portion 301, so that the extension portion 66 is fixedly connected to the wall portion 301 through engagement between the second engagement protrusion 3012 and the second engagement groove 662, and the extension portion is further engaged with the insertion portion 62, to fix the insulating protection member 60, thereby facilitating assembly and fixing.

In some embodiments, both the second clamping protrusion 661 and the second engagement groove 662 are provided on the extension portion 66, the second clamping groove 3011 that is engaged with the second clamping protrusion 661 is provided on the wall portion 301, and the second engagement protrusion 3012 that is engaged with the second engagement groove 662 is arranged on the wall portion 301.

In some embodiments, the extension portion 66 covers the outer surface of the wall portion 301. The extension portion 66 covers the outer surface of the wall portion 301, to well protect the wall portion 301, thereby improving the insulating protection performance of the wall portion 301. It may be understood that, in some embodiments, the extension portion 66 may alternatively cover a partial region of the outer surface of the wall portion 301.

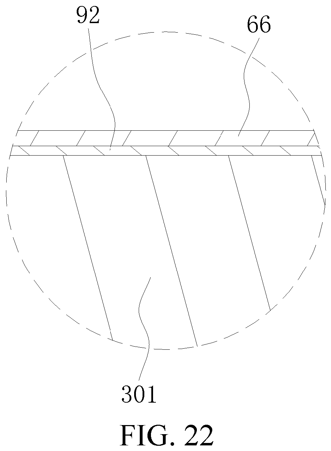

Referring to FIG. 21 and FIG. 22, FIG. 21 is a schematic cross-sectional structural view of a connection part between an electrode terminal 41 and a wall portion 301 on a housing 30 according to some embodiments of the present application. FIG. 22 is an enlarged view of a part G in FIG. 21.

In some embodiments, the extension portion 66 is bonded to the wall portion 301.

That the extension portion 66 is bonded to the wall portion 301 refers to that the extension portion 66 is fixedly connected to the wall portion 301 in a bonding manner.

The extension portion 66 is bonded to the wall portion 301, so that the extension portion 66 is fixedly connected to the wall portion 301, and the extension portion is further engaged with the insertion portion 62, to fix the insulating protection member 60, thereby facilitating assembly and fixing.

In some embodiments, a second adhesive layer 92 may be arranged on an outer surface of the extension portion 66 close to the wall portion 301, so that the extension portion 66 is bonded to the outer surface of the wall portion 301 through the second adhesive layer 92, thereby facilitating assembly.

In some embodiments, an adhesive layer may alternatively be arranged and coated on a surface of the extension portion 66 close to the wall portion 301, so that the extension portion is bonded to the outer surface of the wall portion 301, thereby facilitating assembly.

In some embodiments, the extension portion 66 may alternatively be welded to the outer surface of the wall portion 301. For example, the extension portion 66 is welded to the outer surface of the wall portion 301 in an ultrasonic welding manner, to ensure that the extension portion 66 is firmly connected to the wall portion 301.

In some embodiments, the first fixing structure 51 is an integrally formed structure, thereby facilitating processing and manufacturing of the first fixing structure 51.

In some embodiments, the first coverage portion 61, the second coverage portion 63, the extension portion 66, and the insertion portion 62 are integrally formed and arranged.

The first coverage portion 61, the second coverage portion 63, the extension portion 66, and the insertion portion 62 are integrally formed, so that the insulating protection member 60 is integrally formed, to facilitate processing and manufacturing of the insulating protection member 60.

In some embodiments, referring to FIG. 6 again, the first fixing structure 51 and the wall portion 301 are an integrally formed structure, that is, the first fixing structure 51 and the wall portion 301 are integrally manufactured. The first fixing structure 51 and the wall portion 301 are integrally formed, so that connection and fixing between the first fixing structure 51 and the wall portion 301 are facilitated, and processing and manufacturing are also facilitated.

In some embodiments, referring to FIG. 11 again, the first fixing structure 51 and the second fixing structure 52 are an integrally formed structure, that is, the first fixing structure 51 and the second fixing structure 52 are integrally manufactured. In other words, the fixing structure 50 is an integrally formed structure. The first fixing structure 51 and the second fixing structure 52 are integrally formed, so that connection and fixing between the first fixing structure 51 and the second fixing structure 52 are facilitated, and processing and manufacturing are also facilitated.

In some embodiments, referring to FIG. 13 again, the second fixing structure 52 and the wall portion 301 are an integrally formed structure, that is, the second fixing structure 52 and the wall portion 301 are integrally manufactured. The second fixing structure 52 and the wall portion 301 are integrally formed, so that connection and fixing between the second fixing structure 52 and the wall portion 301 are facilitated, and processing and manufacturing are also facilitated.

In some embodiments, referring to FIG. 6 again, the second fixing structure 52 may be independently manufactured and then fixedly connected to the wall portion 301, so that the second fixing structure 52 cooperates with the first fixing structure 51 to clamp the electrode terminal 41, thereby facilitating assembly.

In some embodiments, referring to FIG. 11 again, the fixing structure 50 is integrally formed, and the fixing structure 50 is independently manufactured and then fixedly connected to the wall portion 301, thereby facilitating processing and manufacturing.

In some embodiments, referring to FIG. 13 again, the first fixing structure 51 may be independently manufactured and then fixedly connected to the wall portion 301, so that the first fixing structure 51 cooperates with the second fixing structure 52 to clamp the electrode terminal 41, thereby facilitating assembly.

In some embodiments, referring to FIG. 16, the fixing structure 50 and the wall portion 301 are an integrally formed structure, that is, the fixing structure 50 and the wall portion 301 are integrally manufactured. In other words, the first fixing structure 51, the second fixing structure 52, and the wall portion 301 are integrally formed. The fixing structure 50 and the wall portion 301 are integrally formed, so that connection and fixing between the fixing structure 50 and the wall portion 301 are facilitated, and processing and manufacturing are also facilitated.

In some embodiments, an insulating sealing member 43 is further arranged between the fixing structure 50 and the electrode terminal 41.

The insulating sealing member 43 is a sealing structural member having an insulating characteristic. The insulating sealing member 43 may be made of a material such as silicone or rubber that has an insulating characteristic.

The insulating sealing member 43 is arranged between the fixing structure 50 and the electrode terminal 41, so that the sealing performance is improved, and the insulating protection performance between the fixing structure 50 and the electrode terminal 41 can be improved.

In some embodiments, the fixing structure 50 includes the first fixing structure 51 and the second fixing structure 52, the insulating sealing member 43 is arranged between the second fixing structure 52 and the electrode terminal 41, and the insulating member 42 is arranged between the first fixing structure 51 and the electrode terminal 41, so that the insulating sealing member 43 cooperates with the insulating member 42, and the electrode terminal 41 is insulated and isolated from the fixing structure 50.

A battery cell 200 is provided according to some embodiments of the present application, including a housing 30, an electrode assembly 21, an electrode terminal 41, an insulating member 42, and an insulating sealing member 43. The housing 30 includes a wall portion 301 and a fixing structure 50, the fixing structure 50 includes a first fixing structure 51 and a second fixing structure 52, at least one of the first fixing structure 51 and the second fixing structure 52 is fixedly connected to the wall portion 301, the first fixing structure 51 is located on an inner side of the second fixing structure 52 away from the housing 30, and the first fixing structure 51 cooperates with the second fixing structure 52 to clamp and fix the electrode terminal 41, to fix the electrode terminal 41 onto the wall portion 301. The insulating sealing member 43 is arranged between the second fixing structure 52 and the electrode terminal 41, and insulating member 42 is arranged between the first fixing structure 51 and the electrode terminal 41, so that the insulating sealing member 43 cooperates with the insulating member 42, to insulate and isolate the electrode terminal 41 from the fixing structure 50. The insulating protection member 60 at least partially covers an outer surface of the first fixing structure 51, the insulating protection member 60 includes an insertion portion 62, and at least a part of the insertion portion 62 is inserted between the first fixing structure 51 and the insulating member 42. The insulation performance of an outer surface of the fixing structure 50 is improved, thereby reducing the influence of an external conductive member and reducing a short circuit risk. The insertion portion 62 has a non-sticking characteristic, so that the insertion portion 62 can be inserted between the fixing structure 50 and the insulating member 42, thereby facilitating assembly, and the insulating protection member 60 can better fit and cover the outer surface of the fixing structure 50.

According to some embodiments of the present application, the present application further provides a battery, including the battery cell 200 according to any one of the foregoing solutions.

According to some embodiments of the present application, the present application further provides a power consuming device, including the battery according to any one of the foregoing solutions.

The power consuming device may be any device or system in which the foregoing battery is used.

Finally, it should be noted that the foregoing embodiments are only used for describing the technical solutions of the present application, but are not intended to limit the present application. Although the present application has been described in detail with reference to the foregoing embodiments, a person of ordinary skill in the art should appreciate that they can still make modifications to the technical solutions recorded in the embodiments or make equivalent replacements to some or all technical features of the present application. These modifications or replacements do not cause the essence of corresponding technical solutions to depart from the scope of the technical solutions in the embodiments of the present application, and shall all fall within the scope of the claims and specification of the present application. Especially, as long as there is no structural conflict, the various technical features mentioned in each embodiment may be combined in any way. The present application is not limited to the particular embodiments disclosed herein, but includes all technical solutions that fall within the scope of the claims.

## Claims

1. A battery cell, comprising:
an electrode assembly;
an electrode terminal, electrically connected to the electrode assembly;
a housing, configured to accommodate the electrode assembly, wherein the housing comprises a wall portion and a fixing structure, and the fixing structure is fixedly arranged on the wall portion and configured to fix the electrode terminal;
an insulating member, arranged between the fixing structure and the electrode terminal; and
an insulating protection member, at least partially covering an outer surface of the fixing structure, wherein the insulating protection member comprises an insertion portion, and at least a part of the insertion portion is inserted between the fixing structure and the insulating member.

2. The battery cell according to claim 1, wherein the fixing structure comprises a first fixing structure and a second fixing structure, at least one of the first fixing structure and the second fixing structure is fixedly connected to the wall portion, the first fixing structure is located on an inner side of the second fixing structure away from the housing in a thickness direction of the wall portion, the first fixing structure cooperates with the second fixing structure to clamp and fix the electrode terminal, at least a part of the insulating protection member covers an outer surface of the first fixing structure, and at least a part of the insertion portion is inserted between the first fixing structure and the insulating member.

3. The battery cell according to claim 2, wherein the first fixing structure comprises a connection portion and a clamping portion; in the thickness direction of the wall portion, the clamping portion and the second fixing structure are arranged opposite to each other, and the connection portion is located between the clamping portion and the second fixing structure;
the insulating member comprises a first insulating portion and a second insulating portion, at least a part of the first insulating portion is located between the clamping portion and the electrode terminal in the thickness direction of the wall portion, at least a part of the second insulating portion is located between the clamping portion and the electrode terminal in a first direction, and the first direction is a direction pointing from the clamping portion to the electrode terminal and perpendicular to the thickness direction of the wall portion; and
at least a part of the insertion portion is located between the first insulating portion and the clamping portion.

4. The battery cell according to claim 3, wherein the insertion portion is provided with a first engagement portion, a second engagement portion is arranged between the first fixing structure and the insulating member, and the first engagement portion is in engagement fit with the second engagement portion.

5. The battery cell according to claim 4, wherein the first engagement portion comprises a limiting protrusion, the second engagement portion is arranged on at least one of the first fixing structure and the insulating member, the second engagement portion comprises a limiting groove, and at least a part of the limiting protrusion is accommodated in the limiting groove.

6. The battery cell according to claim 4, wherein the first engagement portion comprises a limiting protrusion, the second engagement portion comprises an accommodating gap formed between the first fixing structure and the second insulating portion, and at least a part of the limiting protrusion is accommodated in the accommodating gap.

7. The battery cell according to claim 6, wherein the clamping portion has a first end surface facing the first insulating portion, the clamping portion has a second end surface facing the second insulating portion, the first end surface and the second end surface are connected through a first transition surface, the first transition surface is a rounded surface or a chamfered surface, and the first transition surface and the second insulating portion are spaced apart to form the accommodating gap.

8. The battery cell according to claim 3, wherein the insulating protection member comprises a first coverage portion covering an outer surface of the clamping portion, and the insertion portion is connected to the first coverage portion.

9. The battery cell according to claim 8, wherein the first coverage portion is bonded to the clamping portion.

10. The battery cell according to claim 8 or 9, wherein the insulating protection member further comprises a second coverage portion attached against an outer surface of the connection portion, and the second coverage portion is connected to the first coverage portion.

11. The battery cell according to claim 10, wherein a first clamping protrusion is arranged on the second coverage portion, and a first clamping groove that is engaged with the first clamping protrusion is provided on the connection portion; and/or
a first engagement groove is provided on the second coverage portion, and a first engagement protrusion that is engaged with the first engagement groove is arranged on the connection portion.

12. The battery cell according to claim 10 or 11, wherein an angle between the second coverage portion and the first coverage portion is an acute angle.

13. The battery cell according to any one of claims 10 to 12, wherein a surface of the second coverage portion close to the connection portion has a non-sticking characteristic.

14. The battery cell according to any one of claims 10 to 13, wherein the insulating protection member further comprises an extension portion covering an outer surface of the wall portion, and the extension portion is connected to the second coverage portion.

15. The battery cell according to claim 14, wherein the first coverage portion, the second coverage portion, the extension portion, and the insertion portion are integrally formed and arranged.

16. The battery cell according to any one of claims 2 to 15, wherein the first fixing structure and the wall portion are an integrally formed structure; and/or
the second fixing structure and the wall portion are an integrally formed structure; and/or
the first fixing structure and the second fixing structure are an integrally formed structure.

17. The battery cell according to any one of claims 1 to 16, wherein an insulating sealing member is further arranged between the fixing structure and the electrode terminal.

18. The battery cell according to any one of claims 1 to 17, wherein the insertion portion has a non-sticking characteristic.

19. The battery cell according to any one of claims 1 to 18, wherein the housing comprises a shell and an end cap, one end of the shell has an opening, the end cap covers the opening, the shell comprises a side wall and a bottom wall, the side wall is annularly disposed on an outer side of the electrode assembly, and the bottom wall and the opening are arranged opposite to each other; and the wall portion is at least a partial region of the end cap, or the wall portion is at least a partial region of the bottom wall, or the wall portion is at least a partial region of the side wall.

20. A battery, comprising the battery cell according to any one of claims 1 to 19.

21. A power consuming device, comprising the battery according to claim 20.
